Europäisches Patentamt

(19) European Patent Office

Office européen des brevets

(11) EP 0 762 151 A2

# (12) EUROPEAN PATENT APPLICATION

(43) Date of publication:
12.03.1997 Bulletin 1997/11

(51) Int. Cl.6: **G02B 1/10**

(21) Application number: 96113919.3

(22) Date of filing: 30.08.1996

(84) Designated Contracting States:
DE FR GB

(30) Priority: 30.08.1995 JP 221952/95
26.09.1995 JP 247823/95
11.10.1995 JP 263280/95
24.10.1995 JP 275878/95
07.02.1996 JP 21240/96
07.02.1996 JP 21241/96
07.02.1996 JP 21242/96
16.02.1996 JP 29497/96

(71) Applicant: NIKON CORPORATION
Tokyo 100 (JP)

(72) Inventors:
• Suzuki, Tetsuo,
c/o Nikon Corp.
Chiyoda-ku, Tokyo 100 (JP)
• Niikura, Hiroshi
Chiyoda-ku, Tokyo 100 (JP)
• Abe, Jun
Chiyoda-ku, Tokyo 100 (JP)

(74) Representative: Hansen, Bernd, Dr. Dipl.-Chem.
et al
Hoffmann, Eitle & Partner,
Patentanwälte,
Arabellastrasse 4
81925 München (DE)

(54) **Optical article with coat and method of making the same**

(57) An optical article comprising a substrate made of a synthetic resin; a modified layer formed on said substrate, said modified layer having a refractive index changing with changes in the thickness thereof; and a hard coat layer formed on said modified layer so as to be continuous with said modified layer, said hard coat layer having a thickness relatively larger than the thickness of said modified layer and having a refractive index which is substantially constant with changes in the thickness thereof.

EP 0 762 151 A2

**Description**

BACKGROUND OF THE INVENTION

Field of the Invention

The present invention relates to an article having a layer for improving its resistance to scratching on a surface thereof and a method of making the same. In particular, it relates to optical articles such as plastic lens for glasses, CRT display, optical lens, and liquid crystal display device, as well as methods of making the same.

Related Background Art

In order to improve the scratching resistance of an optical article such as plastic lens for glasses, techniques have been known for forming a coat called "hard coat" on a surface thereof. In order to form this coat, there has been conventionally used a (dipping) surface processing technique in which the object article is dipped into an immersion agent such as silane coupling agent. This dipping surface processing technique has been considered to be a very effective technique when the material of the object article is a synthetic resin, in view of the heat resistance of the material.

In the dipping surface processing technique, however, when the material of the coat is changed, the composition of the immersion agent has to be changed in response to the refractive index thereof. Accordingly, each time a new lens with a high refractive index is developed, it is necessary to develop an immersion agent for forming a hard coat with a refractive index suitable therefor. Also, a dipping surface processing equipment having a variety of immersion agents is necessary so as to be applicable to a variety of refractive indices.

As a method or technique other than the dipping surface processing technique, Japanese Patent Laid-Open No. 5-140356 discloses a coat manufacturing technique based on plasma CVD. In this technique, in order to improve adhesion and surface hardness of a transparent resin window, a surface-hardening film of a silicon-containing layer ($SiO_x$ layer) is formed by plasma CVD. In the coat formed by this method, however, peeling of the film occurs in a hot-water immersion test at 80°C for 10 minutes, thereby making it difficult to be applied to articles such as plastic lens for glasses in which resistance to hot water is required.

European Patent EP-2037030 discloses a method comprising the steps of forming an organic silicon compound on a substrate for an optical member by the dipping surface processing technique, forming an anti-reflection film thereon, and then forming an organic curable material (water-repellent coat) thereon, thereby forming a coat composed of a plurality of layers. In this method, however, curing time for the coat according to the dipping surface processing technique is so long that it is difficult to realize one continuous step including a step for forming the anti-reflection film.

Further, Japanese Patent Laid-Open No. 62-247302 discloses a surface modifying technique in which a silazane compound is formed on an anti-reflection coat film of an inorganic material, thereby rendering water repellency thereto.

Also, there has been known a method in which an organic silicone coat is formed on a plastic lens by a dipping surface processing technique (dipping technique) and then an anti-reflection film is formed thereon by a vacuum deposition technique, whereby the number of kinds of immersion agents is reduced.

Recently, on the other hand, it has been required for plastic lenses for glasses to have an improved durability. In particular, as their material has a higher refractive index, there are greater demands for mechanical durability characteristics, i.e., hot-water resistance, heat resistance, acid resistance, and scratching resistance. Also, improvement in aesthetic appearance such as prevention of interference fringe is required.

Also, Japanese Patent Laid-Open Nos. 7-56001 and 7-56002 disclose that generation of interference fringe is suppressed when the refractive index of a hard coat layer of a plastic lens is changed in the thickness direction of a plastic substrate. Here, the hard coat layer is made of a mixed material comprising a material with a high refractive index and a material with a low refractive index, while their mixing ratio is changed in the film thickness direction so as to alter the refractive index. In this technique, in order to maintain an equilibrium state in a space charge constituted by both positive and negative ions of metals, oxygen, and the like generated in a plasma, stable control is necessary for these positive and negative ions. In practice, however, when this control is performed for a long period of time, the bias voltage generated on the substrate side is tend to become unstable. It may result in a phenomenon in which discharge by plasma is continued or interrupted, whereby the atomic composition ratio within thus formed thin film becomes uneven while a defect is generated in the oxygen binding state within the hard coat layer. Consequently, thus formed oxide film tends to contain a lower oxide, whereby the hard coat layer itself may generate absorption and be colored. This coloring becomes more remarkable as the thickness of the hard coat layer is larger.

An object of the present invention is to provide an article provided with a coat which overcomes the foregoing problems, has a high resistance to environment, can be made transparent, and is effective in suppressing the generation of interference fringes.

Another object of the present invention is to provide a method of making such a coat in a continuous step by a vapor-phase growth technique.

## SUMMARY OF THE INVENTION

The inventors have tried to form a hard coat layer on a surface of plastic substrates having a variety of refractive indices, thereby improving the durability of the lens, overcoming the difficulty in gradually changing the refractive index, and attaining an optical article which is excellent in anti-reflection effects.

As a result, the relationship between the durability and thickness of the hard coat layer has been reconsidered. Namely, though the hard coat layer has conventionally been formed with a thickness of 3 μm or greater in order to secure a sufficient durability, this thickness is found to be too large for gradually changing the refractive index. It is also found, however, that the aimed aspect of durability deteriorates when the thickness of the hard coat is made too thin in order to make it easy for the refractive index to be gradually changed.

The inventors have made it an object to provide an optical article which, in a simple manner, forms a hard coat layer preventing absorption from occurring while maintaining durability of the hard coat layer and is also excellent in anti-reflection effects.

### Optical Article

The present invention provides an optical article comprising a substrate made of a synthetic resin which transmits light therethrough; a modified layer which is formed on the substrate and has a refractive index changing with changes in the thickness thereof; and a hard coat layer which is formed on the modified layer so as to be continuous with the modified layer, has a thickness relatively larger than the thickness of the modified layer, and has a refractive index which is substantially unchanged and constant with changes in the thickness thereof.

The present invention provides an optical article further comprising an anti-reflection film on the hard coat layer. Also, the present invention provides an optical article further comprising a multifunctional thin film on the anti-reflection film.

### Substrate

In the optical article of the present invention, usable is a substrate made of a material arbitrarily selected from the group consisting of polycarbonate, polymethyl methacrylate and its copolymers, polymers of diethylene glycol bis(allyl carbonate) (CR-39, manufactured by Pittsburgh Plate Glass Corporation), polyesters, unsaturated polyesters, acrylonitrile-styrene copolymers, vinyl chloride, polyurethane, epoxy resins, and polymers and copolymers of mono or di(meth)acrylate containing halogen (other than fluorine) and hydroxyl group and isocyanate compounds. As a polyester, polyethylene terephthalate is preferable.

More preferably, usable is a substrate made of any member selected from the group consisting of polymers of diethylene glycol bis(allyl carbonate), polyurethane, and polymers and copolymers of mono or di(meth)acrylate containing halogen (other than fluorine) and hydroxyl group and isocyanate compounds.

### Modified Layer and Hard Coat Layer

The modified layer in the optical article of the present invention can contain at least one of Sn-type, Zr-type, Al-type, Hf-type, Ta-type, Si-type, Sb-type, Ti-type, W-type, Fe-type, In-type, and Y-type organic compounds; whereas the hard coat layer can contain at least one of Sn-type, Zr-type, Al-type, Hf-type, Ta-type, Si-type, Sb-type, Ti-type, W-type, Fe-type, In-type, and Y-type organic compounds. Preferably, the modified layer contains at least one of the Si-type and Ti-type compounds, while the hard coat layer contains Si and O.

Preferably, the modified layer has a thickness greater than 100 nm but smaller than 900 nm, while the hard coat layer has a thickness greater than 0.4 μm but smaller than 5 μm.

The modified layer in the present invention is a layer which is formed on a surface of the substrate and has a refractive index gradually and continuously changing with changes in the thickness thereof, for example in the direction perpendicular to the substrate. This is due to a change in the composition ratio of materials within the modified layer. When the modified layer is present between the substrate and the hard coat layer, improvement in shock resistance is seen. This is due to the fact that the internal stress remaining in the hard coat layer can be lowered. Further, the adhesion of the hard coat layer to the substrate is improved, whereby the interface therebetween can be prevented from being broken.

### Anti-reflection Film

The anti-reflection film in the optical article of the present invention comprises first, second, third, and fourth layers successively laminated on the hard coat layer from the substrate side. Preferably, the first layer contains titanium oxide or zirconium oxide, the third layer contains titanium oxide or zirconium oxide, and the second and fourth layers contain silicon oxide. More preferably, the first layer contains aluminum oxide, the second and third layers contain zirconium oxide, and the fourth layer contains silicon oxide.

Also, preferably, while the anti-reflection film comprises first, second, third, and fourth layers successively laminated on the hard coat layer from the substrate side, assuming that the optical thickness of each layer is the product of the geometric thickness of the layer and the refractive index of the layer, the optical thickness of each of the first and second layers is at least $0.05 \times \lambda$ but not exceeding $0.15 \times \lambda$, the optical thickness of the third layer is at least $0.36 \times \lambda$ but not exceeding $0.49 \times \lambda$, and the optical thickness of the fourth layer is at least $0.15 \times \lambda$ but not exceeding $0.35 \times \lambda$. Here, $\lambda$ is any value of at least 450 but not exceeding 550. More preferably, assuming that $\lambda$ is the central wavelength of light incident on the anti-reflection film, each of the first, second, third, and fourth layers has an optical thickness of $\lambda/4$.

A further preferable anti-reflection film is formed as $TiO_2$ and $SiO_2$ films are alternately laminated on each other, while the $TiO_2$ film has a refractive index of at least 2.36 but not exceeding 2.60 with respect to light having a wavelength of at least 500 nm but not exceeding 550 nm. This film may be made by a spattering method.

The surface of the hard coat layer may be exposed to a plasma or ion beam atmosphere comprising, at least, oxygen gas, so as to be activated, whereby its adhesion to the anti-reflection layer can be increased.

Multifunctional Film

The multifunctional film in the optical article of the present invention is a film formed on the anti-reflection film and appropriately selected according to functions to be rendered. When hydrophilic property is to be provided, a compound having a configuration containing a bond of Si-N or Si-N-Si such as an amido-containing silicon compound can be appropriately selected for use. Preferable examples thereof include bis(dimethylamino)methylvinylsilane, 1,3-bis(chloromethyl)-1,1,3,3-tetramethylsilazane, and 1,3-divinyl-1,1,3,3-tetramethyldisilazane.

Also, function for preventing water stain can be provided when an organic compound expressed by the following formula is used :

$$C_pF_{2P+1}CH_2CH_2Si(NH)_{1.5}$$

wherein p is a positive integer.

In addition to the dipping surface processing technique, a chemical vapor deposition technique with plasma may be used to react an organic compound containing Si with a gas composed of a nitro compound introduced thereinto, thereby forming a film made of an amido-containing organic silicon compound as the multifunctional film.

As the nitro compound, that expressed by the following general formula is preferably used:

$$R\text{-}NO_2$$

wherein R is a saturated or unsaturated aliphatic group including 1 to 4 carbon atoms.

Method of Making Optical Article

As a characteristic constitution, the method of making the optical article in accordance with the present invention uses a chemical vapor deposition (CVD) technique with plasma. In this method, discharge of a material gas is generated when thermal energy and electric energy are supplied thereto, and a reaction is accelerated in a thermally non-equilibrium state in this plasma atmosphere, whereby a thin film is deposited on the substrate. Preferably, it is a plasma enhanced CVD (PECVD) technique in which an electric field and a magnetic field are applied to the main plane of the substrate in parallel thereto. Namely, as the magnetic field is provided in parallel to the electric field, an electric field is generated, due to the magnetic field, between electrodes opposed to each other, whereby ions in the plasma are accelerated toward the substrate holder side. Also, the plasma density is homogenized due to the electric field generated by this magnetic field, whereby damages to the substrate formed by ions, increase in temperature, and the like can be suppressed. Since damages to the substrate are less, this technique is quite effective, in particular, in cases where a thin film is to be formed on a transparent substrate such as plastic lens, where there is used a substrate made of a material in which side-chain groups are likely to be ruptured due to damages with ions or a material in which heat resistance is low, and the like.

Specifically, it is a method of making an optical article comprising a first step in which a substrate made of a synthetic resin is set within a magnetic field in an apparatus which is maintained under vacuum, at least one organic compound gas selected from the group consisting of Sn-type, Zr-type, Al-type, Hf-type, Ta-type, Si-type, Sb-type, Ti-type, W-type, Fe-type, In-type, and Y-type organic compounds is introduced thereinto so as to form a modified layer on the substrate by a chemical vapor deposition technique with plasma; and a second step in which a hard coat layer which is relatively thicker than the modified layer is formed on the modified layer so as to be continuous with the modified layer by a chemical deposition technique with plasma using at least one organic compound gas selected from the group consisting of Sn-type, Zr-type, Al-type, Hf-type, Ta-type, Si-type, Sb-type, Ti-type, W-type, Fe-type, In-type, and Y-type organic compounds.

More specifically, the present invention provides a method of making an optical article comprising a first step in which a substrate made of a synthetic resin is set within a magnetic field in an apparatus which is maintained under vacuum, at least one organic compound gas selected from the group consisting of Sn-type, Zr-type, Al-type, Hf-type, Ta-type, Si-type, Sb-type, Ti-type, W-type, Fe-type, In-type, and Y-type organic compounds is heated, vaporized, and turned into a plasma state as a magnetic field is provided and a radio-frequency output is applied thereto for a predetermined period of time, and the flow rate of the organic compound gas and the radio-frequency output are controlled (in CVD technique) so as to form a modified layer, on the substrate, with a refractive index continuously changing with changes in the thickness thereof; a second step in which at least one organic compound gas selected from the group consisting of Sn-type, Zr-type, Al-type, Hf-type, Ta-type, Si-type, Sb-type, Ti-type, W-type, Fe-type, In-type, and Y-type organic compounds is caused to flow in succession to the modified layer and the flow rate of thus flowing organic compound gas and the radio-frequency output are controlled so as to form, on the modified layer in succession thereto, a hard coat layer which is relatively thicker than the modified layer and has a refractive index substantially unchanged and constant with changes in the thickness thereof; and a third step in which, within the apparatus continuously maintained under vacuum, a plurality of layers are vapor-deposited on the hard coat layer under a predetermined condition to form an anti-reflection layer.

Preferably, the pressure of the gas atmosphere in at least one of the first and second steps is controlled to a pressure which is greater than 0.1 Pa but smaller than 13 Pa.

At least one of an organic compound gas containing Si and an organic compound gas containing Ti may be used in the first step, while a mixed gas of the organic compound gas containing Si and oxygen gas may be used in the second step.

As the organic compound containing Si, preferably used are tetraethoxysilane $Si(OC_2H_5)_4$, dimethoxydimethylsilane $(CH_3)_2Si(OCH_3)_2$, methyltrimethoxysilane $CH_3Si(OCH_3)_3$, tetramethoxysilane $Si(OCH_3)_4$, ethyltrimethoxysilane $C_2H_5Si(OCH_3)_3$, diethoxydimethylsilane $(CH_3)_2Si(OC_2H_5)_2$, methyltriethoxysilane $CH_3Si(OC_2H_5)_3$, trimethoxysilane $HSi(OCH_3)_3$, and the like.

As the organic compound containing Ti, preferably used are tetramethoxytitanium $Ti(OCH_3)_4$, tetraethoxytitanium $Ti(OC_2H_5)_4$, tetra-$\underline{i}$-propoxytitanium $Ti(O-\underline{i}-C_3H_7)_4$, tetra-$\underline{n}$-propoxytitanium $Ti(O-\underline{n}-C_3H_7)_4$, tetra-$\underline{n}$-butoxytitanium $Ti(O-\underline{n}-C_4H_9)_4$, tetra-$\underline{i}$-butoxytitanium $Ti(O-\underline{i}-C_4H_9)_4$, tetra-$\underline{sec}$-butoxytitanium $Ti(O-\underline{sec}-C_4H_9)_4$, tetra-$\underline{t}$-butoxytitanium $Ti(O-\underline{t}-C_4H_9)_4$, tetradiethylaminotitanium $Ti(N(C_2H_5)_2)_4$, and the like.

The above-mentioned Si-containing organic compounds and Ti-containing organic compounds may be used separately as well as in combination of two or more species.

For example, when at least one of the Si amount and the organic compound gas amount of Ti is controlled according to the direction of growth of the coat, the refractive index of the modified layer can be changed with changes in the thickness thereof. Accordingly, interference fringes due to the difference in refractive index between the substrate and the coat can be prevented from occurring. Also, in the case where a Ti-containing organic compound gas is used, the modified layer can be made thin so as to become transparent.

The hard coat layer can be made transparent, as the amount of oxygen included in the composition of the organic compound gas is controlled, even when it has a large thickness.

According to the foregoing methods, there can be obtained an optical article in which the refractive index of the modified layer changes with changes in the thickness thereof, while the refractive index of the hard coat layer is within the range where it is substantially unchanged with changes in the thickness thereof. Here, the range where the refractive index is substantially unchanged or constant refers to the range in which the change in refractive index is within ±3%. Also, the hard coat layer is configured so as to be thicker than the modified layer.

Near the interface between the modified layer and the hard coat layer, for example, the gas flow rate of an organic compound containing a Si-type alkoxy group is gradually increased, while that of an organic compound containing a Ti-type alkoxy group is gradually decreased. Here, their flow rates are accurately increased and decreased, respectively, such that the ratio of their amounts of change in the flow rates are 1:(3 or less) when calculated as the ratio of the numbers of Si and Ti atoms respectively contained in their amounts of change. According to this operation, the bonding strength at the interface between the modified layer and the hard coat layer region can be increased.

Preferably, an activating process is performed at a step between the second step and third step to activate the surface of the hard coat layer. Specifically, in this process the rate of Ti-type organic compound gas and/or Si-type organic compound gas is gradually decreased for about 500 seconds before the completion of the socond step and oxegen gas then is introduced to the system for 100 seconds after stopping the supply of the organic gas.

In the present invention, the activating process means the process of exposing the surface of the hard coat layer in the plasma of the gas containing oxygen which is made by introducing the mixed gas with oxygen into the system. As the gas mixed with oxygen, preferably used are nitrogen, hydrogen, helium, neon, argon, ammonia, carbon monooxide, chlorine, nitrogen monooxide, nitrogen dioxide, and the like.

These compounds may be used separately as well as in combination of two or more species.

As the Zr-type organic compound, preferably used are tetramethoxyzirconium, tetraethoxyzirconium, tetra-n-propoxyzirconium, tetra-i-propoxyzirconium, tetra-i-butoxyzirconium, tetra-n-butoxyzirconium, tetra-sec-butoxyzirconium, tetra-t-butoxyzirconium, and the like. As the Sn-type organic compound, preferably used are tetraetoxytin, tetra-i-propoxytin, tetra-n-butoxytin, and the like.

As the Hf-type organic compound, preferably used are tetraethoxyhafnium, tetra-i-propoxyhafnium, tetra-t-butoxyhafnium, and the like.

As the Al-type organic compound, preferably used are trimethoxyaluminum, triethoxyaluminum, tri-n-propoxyaluminum, tri-i-propoxyaluminum, tri-i-butoxyaluminum, tri-n-butoxyaluminum, tri-sec-butoxyaluminum, tri-t-butoxyaluminum, and the like.

As the Ta-type organic compound, preferably used are pentamethoxytantalum, pentaethoxytantalum, pentapropoxytantalum, pentabutoxytantalum, and the like.

These compounds may be used separately as well as in combination of two or more species.

The basic configuration of the present invention is that it comprises, on a substrate made of a synthetic resin, a coat having a modified layer and a hard coat layer. Preferably, an anti-reflection layer is further disposed on the hard coat layer. More preferably, a multifunctional film is further disposed on the anti-reflection layer.

According to this configuration, the substrate made of the synthetic resin is protected, while the modified layer can improve the adhesion between the hard coat layer and the substrate and absorb the shock imparted to the hard coat layer, whereby the resistance of the whole coat to environment is improved. Also, the hard coat layer has both composition and structure which themselves are excellent in durability, while containing no materials with a high refractive index. Accordingly, it can be easily made transparent when the amount of oxygen is adjusted. Therefore, it may be formed with a large thickness. The hard coat layer is excellent in mechanical durability and drug resistance.

Due to such effects of the modified layer and hard coat layer, a plastic lens provided with the coat of the present invention can attain a high resistance to environment.

The anti-reflection film can suppress the generation of interference fringes. Also, when it is formed as a thin film satisfying an optical condition, it can be made transparent. Thus, each layer formed on the substrate in accordance with the present invention can be made transparent. Accordingly, the method of the present invention can be preferably used for forming a coat for a plastic lens for glasses.

In the manufacturing method in accordance with the present invention, a manufacturing step for forming a coat in one and continuous vapor deposition process is established. Accordingly, the disposal of waste water which accompanies the surface activation processing or the like in the conventional method becomes unnecessary, thereby overcoming the problem of environmental pollution.

DESCRIPTION OF THE PREFERRED EMBODIMENTS

In order to form, under a predetermined condition, a modified layer on a surface of a substrate plastic lens and, subsequently, a hard coat layer thereon so as to be continuous therewith for the purpose of attaining an optical article of the present invention, it is necessary to determine the relationship between the amount of the organic gas introduced at each step and the resulting refractive index beforehand. One of examples is explained in the following.

Containers containing diethoxydimethylsilane and tetra-i-propoxytitanium, respectively, and connected to a vacuum chamber are heated so as to vaporize diethoxydimethylsilane and tetra-i-propoxytitanium, and diethoxydimethylsilane gas and tetra-i-propoxytitanium gas are caused to flow into the vacuum chamber with flow rates of 9 SCCM(Standard Cubic Centimeter per Minute) and 6 SCCM, respectively. When the pressure in the vacuum chamber becomes 0.7 Pa, current of 5 A is caused to flow through an electromagnet coil disposed outside of the vacuum chamber so as to provide a magnetic field between electrodes, while a radio-frequency output of 2 kW is applied to the cathode for 3 minutes. Accordingly, a plasma is generated between the electrodes. The magnetic field stabilises the low-pressure arc discharge. It has been confirmed that, when the flow rate of diethoxydimethylsilane gas was changed from 11 SCCM to 20 SCCM while the flow rate of tetra-i-propoxytitanium gas was constantly held at 9 SCCM during this period, the refractive index of the resulting modified layer changed from 1.67 to 1.56. During this period, the flow rate of oxygen gas was kept at 27 SCCM. Further, when the flow rate of each of tetra-i-propoxytitanium gas and oxygen gas was 0 SCCM while the flow rate of diethoxydimethylsilane gas was 100 SCCM, the refractive index was 1.50. Based on these data, it has been found that a modified layer having a continuously and gradually changing refractive index can be obtained when the ratio of flow rate of a specific organic compound gas is appropriately changed when necessary.

In the step for forming the hard coat layer, the gas flow rate may be held constant such that the refractive index becomes substantially constant throughout the resulting film, while the film thickness may be controlled by the gas flowing time. For example, in succession to the step for forming the modified layer, the flow rate of oxygen gas is set to 0 SCCM, the pressure of the vacuum chamber is set to 0.5 Pa, and the hard coat layer is formed for 20 minutes under the condition where the flow rate of tetra-i-propoxytitanium gas is 0 SCCM, the flow rate of diethoxydimethylsilane gas is 100 SCCM, the radio-frequency output is 2.5 kW, and the current of the electromagnet coil is 5 A.

The results obtained are listed in Table 1 attached to the last part of the specification.

Substrate + Modified Layer + Hard Coat Layer

Example 1

A plastic lens having a coat composed of a modified layer and a hard coat layer on a surface of its substrate was manufactured and evaluated.

Substrate

As the substrate, a plastic lens made of a polymer of diethylene glycol bis(allyl carbonate) (CR-39, manufactured by Pittsburgh Plate Glass Corporation) was used.

Apparatus

A PECVD apparatus and a vacuum deposition apparatus, manufactured by Balzers Corporation, were used. The vacuum chamber of the PECVD apparatus and that of the vacuum deposition apparatus are connected to each other by way of a load-lock chamber. The load-lock chamber is a space through which a substrate is moved from the vacuum chamber of the PECVD apparatus to that of the vacuum deposition apparatus under a condition where vacuum is maintained.

The PECVD apparatus has an electromagnet coil outside of the vacuum chamber. The electromagnet coil is disposed in a space between a pair of electrodes, which are placed within the vacuum chamber, so as to apply a magnetic field to a direction in parallel to the electric field. In the space between the electrodes, a carousel type substrate holder is disposed so as to hold the main plane of the substrate in parallel to the direction of the electric field.

The deposition apparatus is configured such that a vapor deposition source is heated by an electron beam.

Preparatory Step

The substrate was cleaned as it passed through an ultrasonic cleaning equipment. Thus cleaned substrate was disposed at the substrate holder within the vacuum chamber of the PECVD apparatus, and then the vacuum chamber was exhausted to a pressure of $2.7 \times 10^{-4}$ Pa.

Formation of Modified Layer

A methyltriethoxysilane-containing container connected to the vacuum chamber was heated so as to vaporize methyltriethoxysilane, whereby methyltriethoxysilane gas was caused to flow into the vacuum chamber with a flow rate of 100 SCCM. At the time when the pressure in the vacuum chamber became 0.7 Pa, current of 5 A was caused to flow through the electromagnet coil outside of the vacuum chamber so as to provide a magnetic field between the electrodes, while a radio-frequency output of 2 kW was applied to the cathode for 3 minutes. As a result, plasma was generated between the electrodes. The magnetic field stabilized the low-pressure arc discharge. During this period, the flow rate of methyltriethoxysilane gas was 100 SCCM. Thereafter, the radio-frequency output of the cathode was gradually increased at a rate of 40 W/min and controlled such that it reached 2.5 kW in 12 minutes. During this period of 12 minutes, the flow rate of methyltriethoxysilane gas was made constant at 180 SCCM.

In this period of 12 minutes, a modified layer having a continuously and gradually changing refractive index was formed. The thickness of the modified layer region was 200 nm.

Formation of Hard Coat Layer

In succession to the step for forming the modified layer, while oxygen gas was caused to flow into the vacuum chamber with a flow rate of 50 SCCM and the vacuum chamber pressure was changed to 0.5 Pa, the condition where the flow rate of methyltriethoxysilane gas was 180 SCCM, the radio-frequency output was 2.5 kW, and the current at the electromagnet coil was 5 A was maintained for 20 minutes. Then, while the flow rate of oxygen gas was increased to 100 SCCM and the vacuum chamber pressure was increased to 0.8 Pa, the radio-frequency output of the cathode was changed to 3 kW, and the condition where the flow rate of methyltriethoxysilane gas was 180 SCCM and the current at the electromagnet coil was 5 A was maintained for 40 minutes. Thus, the hard coat layer was formed.

The thickness of the hard coat layer as a whole was controlled so as to be greater than 0.4 $\mu$m but smaller than 5 $\mu$m, while greater than the thickness of the modified layer. The thickness of thus obtained hard coat layer was 1.5 $\mu$m.

According to the foregoing steps, a coat made of the modified layer and hard coat layer was formed on each side of the substrate lens.

No interference fringes were observed in the lens having the coats thus obtained. Also, spectral characteristics were found to be suitably usable for glasses and the like.

Comparative Example 1

On a substrate lens, a coat made of a hard coat layer having a refractive index which did not change in the direction perpendicular to the substrate, i.e., substantially a constant refractive index, was formed. Interference fringes were observed in the lens having the coat thus obtained. Further, its spectral characteristics were found to be inappropriate for glasses.

Example 2

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and tetra-$\underline{i}$-propoxytin gas were caused to flow therein with flow rates of 35 SCCM and 148 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period, a modified layer was formed while the flow rates of the methyltriethoxysilane gas and tetra-$\underline{i}$-propoxytitanium gas were gradually decreased and increased at rates of 23.3 SCCM and 34.7 SCCM, respectively, per minute. When the refractive index of thus formed thin film was measured by a spectrophotometer, $n_d$ of 1.67 and $n_d$ of 1.60 were attained on the lens interface side and medium (air) side, respectively.

Example 3

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, tetra-$\underline{i}$-propoxytin gas and oxygen gas were caused to flow therein with flow rates of 200 SCCM and 50 SCCM, respectively. When the pressure in the vacuum chamber became 2.0 Pa and the flow rates were stabilized, while current of 5 A was caused to flow through the external electromagnet coil, a radio-frequency output of 2 kW was applied to the cathode for 17 minutes, thereby forming a hard coat layer. Further, the flow rate of oxygen gas was increased to 100 SCCM. A variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 200 SCCM. When the refractive index of thus formed thin film was measured by the spectrophotometer, $n_d$ was 1.60.

Example 4

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and tetra-$\underline{i}$-propoxytin gas were caused to flow therein with flow rates of 35 SCCM and 148 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period of 1.5 minutes, a modified layer was formed while the flow rates of the methyltriethoxysilane gas and tetra-$\underline{i}$-propoxytitanium gas were gradually increased and decreased at rates of 110 SCCM and 98.7 SCCM, respectively, per minute.

Then, tetra-$\underline{i}$-propoxytin gas and oxygen gas were caused to flow into the vacuum chamber with flow rates of 200 SCCM and 50 SCCM, respectively. When the pressure in the vacuum chamber became 2.0 Pa and the flow rates were stabilized, while current of 5 A was caused to flow through the external electromagnet coil, a radio-frequency output of 2.5 kW was applied to the cathode for 17 minutes, therby forming a hard coat layer. Further, the flow rate of oxygen gas was increased to 100 SCCM. The variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 200 SCCM.

Example 5

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and tetraethoxyzirconium gas were caused to flow therein with flow rates of 40 SCCM and 135 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period of 1.5 minutes, a modified layer was formed while the flow rates of the methyltriethoxysilane gas and tetraethoxyzirconium gas were gradually increased and decreased at rates of 115 SCCM and 50 SCCM, respectively, per minute. When the refractive index of thus formed thin film was measured by the spectrophotometer, $n_d$ of 1.67 and $n_d$ of 1.60 were attained on the lens interface side and medium (air) side, respectively.

## Example 6

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas, tetraethoxyzirconium gas, and oxygen gas were caused to flow therein with flow rates of 213 SCCM, 60 SCCM, and 60 SCCM, respectively. When the pressure in the vacuum chamber became 2.0 Pa and stabilized, while current of 5 A was caused to flow through the external electromagnet coil, a radio-frequency output of 2.5 kW was applied to the cathode for 17 minutes, therby forming a hard coat layer. Further, the flow rate of oxygen gas was increased to 110 SCCM, and the variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 170 SCCM. When the refractive index of thus formed thin film was measured by the spectrophotometer, $n_d$ was 1.60.

## Example 7

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and tetraethoxyzirconium gas were caused to flow therein with flow rates of 40 SCCM and 135 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period of 1.5 minutes, a modified layer was formed while the flow rates of the methyltriethoxysilane gas and tetraethoxyzirconium gas were gradually increased and decreased at rates of 115 SCCM and 50 SCCM, respectively, per minute.

Methyltriethoxysilane gas, tetraethoxyzirconium gas, and oxygen gas were caused to flow into the vacuum chamber with flow rates of 213 SCCM, 60 SCCM, and 60 SCCM, respectively. When the pressure in the vacuum chamber became 2.0 Pa and stabilized, while current of 5 A was caused to flow through the external electromagnet coil, a radio-frequency output of 2.5 kW was applied to the cathode for 17 minutes, therby forming a hard coat layer. Further, the flow rate of oxygen gas was increased to 110 SCCM, and the variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 170 SCCM.

## Example 8

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and penta-i-propoxytantalum gas were caused to flow therein with flow rates of 50 SCCM and 125 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period of 1.5 minutes, a refractive index modified layer was formed while the flow rates of the methyltriethoxysilane gas and penta-i-propoxytantalum gas were gradually increased and decreased at rates of 120 SCCM and 60 SCCM, respectively, per minute. When the refractive index of thus formed thin film was measured by the spectrophotometer, $n_d$ of 1.67 and $n_d$ of 1.60 were attained on the lens interface side and medium (air) side, respectively.

## Example 9

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas, penta-i-propoxytantalum gas, and oxygen gas were caused to flow therein with flow rates of 230 SCCM, 35 SCCM, and 70 SCCM, respectively. When the pressure in the vacuum chamber became 2.0 Pa and stabilized, while current of 5 A was caused to flow through the external electromagnet coil, a radio-frequency output of 2.5 kW was applied to the cathode for 17 minutes, thereby forming a hard coat layer. Further, the flow rate of oxygen gas was increased to 100 SCCM, and the variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 150 SCCM. When the refractive index of thus formed thin film was measured by the spectrophotometer, $n_d$ was 1.60.

Example 10

A polyurethane type lens was cleaned as it passed through the ultrasonic cleaning equipment. Then, it was disposed in the vacuum chamber of the PECVD apparatus manufactured by Balzers Corporation. After the vacuum chamber was exhausted to a pressure of $2.7 \times 10^{-4}$ Pa, methyltriethoxysilane gas and penta-i-propoxytantalum gas were caused to flow therein with flow rates of 50 SCCM and 125 SCCM, respectively, till the pressure in the vacuum chamber became 2.0 Pa. While current of 5 A was caused to flow through the external electromagnet coil, a radio-frequency output of 2 kW was applied to the cathode for 1.5 minutes. During this period of 1.5 minutes, a refractive index modified layer was formed while the flow rates of the methyltriethoxysilane gas and penta-i-propoxytantalum gas were gradually increased and decreased at rates of 120 SCCM and 60 SCCM, respectively, per minute.

Then, methyltriethoxysilane gas, penta-i-propoxytantalum gas, and oxygen gas were caused to flow into the vacuum chamber with flow rates of 230 SCCM, 35 SCCM, and 70 SCCM, respectively. When the pressure in the vacuum chamber became 2.0 Pa and stabilized, while current of 5 A was caused to flow through the external electromagnet coil, a radio-frequency output of 2.5 kW was applied to the cathode for 17 minutes, thereby forming a hard coat layer. Further, the flow rate of oxygen gas was increased to 100 SCCM, and the variable orifice was opened so as to adjust conductance of the exhaust system such that the pressure in the vacuum chamber became 2.0 Pa. Then, the hard coat layer was continuously formed for 17 minutes, while the radio-frequency output of the cathode was increased to 3 kW. Finally, the hard coat layer was further formed for 17 minutes, while the flow rate of oxygen gas was increased to 150 SCCM.

Comparative Example 2

A CR-39 lens was cleaned as it passed thorough the ultrasonic cleaning equipment. Then, it was dipped into and coated with a hard coat composition solution in which a co-hydrolysis product of 35.3 parts of γ-glycosidopropyltrimethoxysilane and 106.8 parts of γ-glycosidopropylmethyldiethoxysilane, 185 parts of methanol, 11.1 parts of acetylacetone, and 2.5 parts of a silicone type surfactant had been admixed together with 6.0 parts of aluminum acetylacetonate further added thereto. Thereafter, it was subjected to preparatory heat-curing at 80°C for 10 minutes and then finally heat-cured at 100°C for 4 hours, thereby yielding a plastic lens with a hard coat ($n_d$ of 1.48).

Comparative Example 3

An acrylonitrile-styrene copolymer lens was cleaned as it passed thorough the ultrasonic cleaning equipment. Then, it was dipped into and coated with a hard coat composition solution in which a co-hydrolysis product of 35.3 parts of γ-glycosidopropyltrimethoxysilane and 106.8 parts of γ-glycosidopropylmethyldiethoxysilane, 185 parts of methanol, 11.1 parts of acetylacetone, and 2.5 parts of a silicone type surfactant had been admixed together with 6.0 parts of aluminum acetylacetonate further added thereto. Thereafter, it was subjected to preparatory heat-curing at 80°C for 10 minutes and then finally heat-cured at 100°C for 4 hours, thereby yielding a plastic lens with a hard coat ($n_d$ of 1.48).

Comparative Example 4

An polyurethane type lens was cleaned as it passed thorough the ultrasonic cleaning equipment. Then, it was dipped into and coated with a hard coat composition solution in which a co-hydrolysis product of 35.3 parts of γ-glycosidopropyltrimethoxysilane and 106.8 parts of γ-glycosidopropylmethyldiethoxysilane, 185 parts of methanol, 11.1 parts of acetylacetone, and 2.5 parts of a silicone type surfactant had been admixed together with 6.0 parts of aluminum acetylacetonate further added thereto. Thereafter, it was subjected to preparatory heat-curing at 80°C for 10 minutes and then finally heat-cured at 100°C for 4 hours, thereby yielding a plastic lens with a hard coat ($n_d$ of 1.48).

Comparative Example 5

While 248 parts of γ-glycosidopropylmethyldiethoxysilane were stirred, 36 parts of 0.05-N aqueous hydrochloric acid solution were added thereto, thereby yielding a hydrolysis product. To this product, 56.6 parts of ethanol and 53.4 parts of ethylene glycol were added and then 4.7 parts of aluminum acetonate were further added, thereby yielding preparatory composition A.

While 212.4 parts of γ-glycosidopropyltrimethoxylsilane were stirred, 48.6 parts of 0.01-N aqueous hydrochloric acid solution were added thereto, thereby yielding a hydrolysis product. To this product, 77.1 parts of ethanol and 37.7 parts of ethylene glycol were added and then 7.65 parts of aluminum acetonate were added, thereby yielding preparatory composition B.

To an aqueous tungstic acid solution, which was manufactured as an aqueous sodium tungstate solution had been ion-exchanged, an aqueous sodium stannate solution was added while being stirred, thereby yielding an aqueous sol of a complex with a weight ratio of $WO_3/SnO_2$.

Then, 100 parts of commercially-available aqueous sol of tin oxide, calculated as $SnO_2$, were prepared, and 25 to 60 parts of the above-mentioned complex sol, calculated on the basis of weight of $WO_3$ and $SnO_2$, were added thereto while being stirred at room temperature, thereby yielding a modified sol with a specific gravity of 1.03. Thereafter, it was changed into a high-concentration modified sol with a specific gravity of 1.172 through a purification process.

To 40 parts of preparatory composition A, 60 parts of preparatory composition B, and 50 parts of the high-concentration modified sol, 0.4 part of a silicone surfactant was added. As they were mixed together, a hard coat composition with a refractive index ($n_d$) of 1.63 was obtained.

After a polyurethane type lens was cleaned as it passed through the ultrasonic cleaning equipment, it was dipped in and coated with the above-mentioned hard coat composition. Thereafter, it was heat-cured at 100°C for 2 hours.

(Evaluation)

With respect to the samples of plastic lenses for glasses obtained by the foregoing examples and comparative examples, mechanical durability was evaluated in terms of the following items:

1) Adhesion

According to JIS D-202, incisions are formed longitudinally and laterally on the surface of each sample with intervals of 1 mm. A cellophane tape (manufactured by Nichiban Co., Ltd.; product name: Sellotape) is attached onto these incisions and then removed with a force of 4 kgf to study whether the film is peeled off or not.

2) Resistance to Scratching

(a) A steel wool with a roughness of #0000 is pressed against the sample with a load of 600 gf and reciprocated 30 times in 15 seconds. Then it is studied whether there is a damage on the sample surface or not.
(b) A sand eraser (manufactured by Lion Office Products Corporation, product name: Sand Eraser ER-520) is pressed against the sample with a load of 500 gf and reciprocated 30 times in 15 seconds. Then it is studied whether there is a damage on the sample surface or not.

3) Resistance to Hot Water

After the sample has been dipped in city water in a thermostat at 80°C for 10 minutes, it is studied whether there is a change in the film on the sample surface or not.

4) Resistance to Heat

After the sample has been left in the atmosphere of 100°C in an air oven for 5 minutes, it is studied whether there is a change in the film on the sample surface or not.

5) Resistance to Alkali

After the sample has been dipped in an aqueous sodium hydroxide solution (pH 11) for 6 hours, it is studied whether there is a change in the film on the sample surface or not.

6) Resistance to Acid

After the sample has been dipped in an aqueous nitric acid solution (pH 1) for 6 hours, it is studied whether there is a change in the film on the sample surface or not.

Results of evaluation are shown in Table 2 attached to the last part of the specification.

As further examples, films were formed in a manner similar to Examples 2, 3, and 4, while pentaethoxytantalum, tetra-i-propoxyzirconium, tri-i-propoxyaluminum, and tetra-i-propoxyhafnium were respectively used in place of tetra-i-propoxytin in Examples 2, 3, and 4. When these samples were evaluated in terms of the above-mentioned evaluation items, results similar to Examples 2, 3, and 4 were obtained.

Substrate + Modified Layer + Anti-reflection Film

Example 11

A plastic lens having a coat composed of a modified layer, first, second, and third hard coat layers, and a multilayer anti-reflection film on a surface of its substrate was manufactured.

Substrate

As the substrate, a plastic lens made of a polymer of diethylene glycol bis(allyl carbonate) (CR-39, manufactured by Pittsburgh Plate Glass Corporation) was used.

Apparatus

A PECVD apparatus and a vacuum deposition apparatus, manufactured by Balzers Corporation, were used. The vacuum chamber of the PECVD apparatus and that of the vacuum vapor deposition apparatus are connected to each other by way of a load-lock chamber. The load-lock chamber is a space through which a substrate is moved from the vacuum chamber of the PECVD apparatus to that of the vacuum vapor deposition apparatus under a condition where vacuum is maintained.

The PECVD apparatus has an electromagnet coil outside of the vacuum chamber. The electromagnet coil is disposed in a space between a pair of electrodes, which are placed within the vacuum chamber, so as to apply a magnetic field to a direction in parallel to the electric field. In the space between the electrodes, a carousel type substrate holder is disposed so as to hold the main plane of the substrate in parallel to the direction of the electric field.

The vapor deposition apparatus is configured such that a vapor deposition source is heated by an electron beam.

Preparatory Step

The substrate was cleaned as it passed through an ultrasonic cleaning equipment. Thus cleaned substrate was disposed at the substrate holder within the vacuum chamber of the PECVD apparatus, and then the vacuum chamber was exhausted to a pressure of $2.7 \times 10^{-4}$ Pa.

Formation of Modified Layer

A methyltriethoxysilane-containing container connected to the vacuum chamber was heated so as to vaporize methyltriethoxysilane, whereby methyltriethoxysilane gas was caused to flow into the vacuum chamber with a flow rate of 100 SCCM. At the time when the pressure in the vacuum chamber became 0.7 Pa, current of 5 A was caused to flow through the electromagnet coil outside of the vacuum chamber so as to provide a magnetic field between the electrodes, while a radio-frequency output of 2 kW was applied to the cathode for 3 minutes. As a result, plasma was generated between the electrodes. The magnetic field stabilized the low-pressure arc discharge. During this period, the flow rate of methyltriethoxysilane gas was 100 SCCM. Thereafter, the radio-frequency output of the cathode was gradually increased at a rate of 40 W/min and controlled such that it reached 2.5 kW in 12 minutes. During this period of 12 minutes, the flow rate of methyltriethoxysilane gas was made constant at 180 SCCM.

In this period of 12 minutes, a modified layer having a continuously and gradually changing refractive index was formed. The thickness of the modified layer region was 200 nm.

Formation of Hard Coat Layer

In succession to the step for forming the modified layer, while oxygen gas was caused to flow into the vacuum chamber with a flow rate of 50 SCCM and the vacuum chamber pressure was changed to 0.5 Pa, under a condition where the flow rate of methyltriethoxysilane gas was 180 SCCM, the radio-frequency output was 2.5 kW, and the current at the electromagnet coil was 5 A, the first hard coat layer was formed for 20 minutes.

Then, while the flow rate of oxygen gas was increased to 100 SCCM and the vacuum chamber pressure was raised to 0.8 Pa, the radio-frequency output of the cathode was changed to 3 kW, and under the condition where the flow rate of methyltriethoxysilane gas was 180 SCCM and the current at the electromagnet coil was 5 A, the second hard coat layer was further formed for 20 minutes.

Finally, while the flow rate of oxygen gas was increased to 200 SCCM and conductance of the exhaust system was adjusted by a variable orifice so as to maintain the vacuum chamber pressure at 1.0 Pa as it was, under the condition where the flow rate of methyltriethoxysilane gas was 180 SCCM, the current at the electromagnet coil was 5 A, and the radio-frequency pressure of the cathode was 3 kW, the third hard coat layer was further formed.

The thickness of the hard coat layer as a whole was controlled so as to be greater than 0.4 $\mu$m but smaller than 5 $\mu$m, while greater than the thickness of the modified layer. The thickness of thus obtained hard coat layer was 1.5 $\mu$m.

Formation of Anti-reflection Film

Subsequently to the foregoing step, the substrate lens having the coat formed thereon was moved to the load-lock chamber together with the substrate holder. Then, after the orientation of the substrate lens was changed such that one surface thereof was directed toward the vapor deposition source of the vacuum deposition apparatus, it was sent to the vapor deposition chamber.

After the vacuum chamber of the vapor deposition apparatus was exhausted to a pressure of $1.3 \times 10^{-3}$ Pa, an anti-reflection film composed of the following four layers was formed on the third hard coat layer of the substrate lens surface directed toward the vapor deposition source according to an electron beam evaporation technique under the following vapor deposition conditions. As the vapor deposition source, $TiO_x$ ($0<x<2$) was used for the first and third layers, whereas $SiO_2$ was used for the second and fourth layers. Vacuum vapor deposition conditions (A: angstrom)

First layer

| | |
|---|---|
| Titanium dioxide | 114 A (geometric thickness) 0.049 $\lambda$ (optical thickness) |
| Pressure at deposition | $4.2 \times 10^{-3}$ Pa ($O_2$ atmosphere) |

Second layer

| | |
|---|---|
| Silicon dioxide | 380 A (geometric thickness) 0.1605 $\lambda$ (optical thickness) |
| Pressure at deposition | $1 \times 10^{-3}$ Pa |

Third layer

| | |
|---|---|
| Titanium dioxide | 1,167 A (geometric thickness) 0.5 $\lambda$ (optical thickness) |
| Pressure at deposition | $5 \times 10^{-3}$ Pa ($O_2$ atmosphere) |

Fourth layer

| | |
|---|---|
| Silicon dioxide | 871 A (geometric thickness) 0.244 $\lambda$ (optical thickness) |
| Pressure at deposition | $1 \times 10^{-3}$ Pa |

The above-mentioned optical thickness is defined by a product of the refractive index of the layer and the geometric thickness thereof. The center wavelength $\lambda$ = 525 nm, the refractive index of titanium dioxide in the first and third layers was 2.25, and the refractive index of silicon dioxide in the second and fourth layers was 1.47.

Thereafter, by a substrate surface reversing mechanism accompanying the lens substrate holder, the other surface was directed toward the vapor deposition source, and an anti-reflection film was formed thereon under the vapor deposition conditions similar to those mentioned above.

Example 12

As the substrate, a lens made of a polyurethane type polymer was used. The PECVD apparatus identical to that of Example 11 was used. Also, the preparatory step and the thickness values of the modified layer and first, second, and third hard coat layers were made identical to those of Example 11.

Formation of Modified Layer

The methyltriethoxysilane-containing container connected to the vacuum chamber was heated so as to vaporize methyltriethoxysilane, whereby methyltriethoxysilane gas was caused to flow into the vacuum chamber with a flow rate of 35 SCCM. Simultaneously, a dimethoxydimethylsilane-containing container connected to the vacuum chamber was heated so as to vaporize dimethoxydimethylsilane, whereby dimethoxydimethylsilane gas was caused to flow into the vacuum chamber with a flow rate of 148 SCCM. At the time when the pressure in the vacuum chamber became 0.5 Pa, while the flow rates of gases were maintained, current of 5 A was caused to flow through the electromagnet coil outside of the vacuum chamber so as to provide a magnetic field between the electrodes. Then, while the flow rate of methyltriethoxysilane gas was gradually increased with a rate of 110 SCCM per minute and the flow rate of dimethoxydimethylsilane gas was gradually decreased at a rate of 98.7 SCCM per minute, a radio-frequency output of 2 kW was applied to the cathode for 1.5 minutes, during which a modified layer was formed.

Formation of Hard Coat Layer

The first, second, and third hard coat layers were formed subsequently to the step for forming the modified layer.
Methyltriethoxysilane gas and oxygen gas were caused to flow into the vacuum chamber at flow rates of 200 SCCM and 50 SCCM, respectively. When the pressure in the vacuum chamber became 1.0 Pa and the flow rates were stabilized, while current of 5 A was caused to flow through the external electromagnet coil, a radio-frequency output of 2.5 kW was applied to the cathode for 17 minutes so as to form the first hard coat layer.
Then, the flow rate of oxygen gas was increased to 100 SCCM, conductance of the exhaust system was adjusted by the variable orifice such that the pressure in the vacuum chamber pressure became 2.0 Pa, the radio-frequency output of the cathode was changed to 3 kW, and under the condition where the flow rate of methyltriethoxysilane gas was 200 SCCM and the current at the electromagnet coil was 5 A, the second hard coat layer was subsequently formed for 17 minutes.
Finally, while the flow rate of oxygen gas was increased to 200 SCCM, under the condition where the pressure in the vacuum chamber was 2.0 Pa, the radio-frequency output of the cathode was 3 kW, the flow rate of methyltriethoxysilane gas was 200 SCCM, and the current at the electromagnet coil was 5 A, the third hard coat layer was formed for 17 minutes.

Formation of Anti-reflection Film

Subsequently to the foregoing step, the substrate lens having the coat formed thereon was moved to the load-lock chamber together with the substrate holder. Then, after the orientation of the substrate lens was changed such that one surface thereof was directed toward the vapor deposition source of the vacuum deposition apparatus, it was sent to the vapor deposition chamber.
After the vacuum chamber of the vapor deposition apparatus was exhausted to a pressure of $1.3 \times 10^{-3}$ Pa, an anti-reflection film composed of the following four layers was formed on the third hard coat layer of the substrate lens surface directed toward the vapor deposition source according to an electron beam evaporation technique under the following vapor deposition conditions. As the vapor deposition source, $TiO_x$ ($0 < x < 2$) was used for the first and third layers, whereas $SiO_2$ was used for the second and fourth layers. Vacuum vapor deposition conditions (A: angstrom)

First layer

Titanium dioxide          130 A (geometric thickness) 0.055 $\lambda$ (optical thickness)
Pressure at deposition     $4 \times 10^{-3}$ Pa ($O_2$ atmosphere)

Second layer

Silicon dioxide            333 A (geometric thickness) 0.0915 $\lambda$ (optical thickness)
Pressure at deposition     $1 \times 10^{-3}$ Pa

Third layer

Titanium dioxide          1,189 A (geometric thickness) 0.5 $\lambda$ (optical thickness)
Pressure at deposition     $5 \times 10^{-3}$ Pa ($O_2$ atmosphere)

Fourth layer

Silicon dioxide          880 A (geometric thickness) 0.242 $\lambda$ (optical thickness)
Pressure at deposition   $1 \times 10^{-3}$ Pa

The above-mentioned optical thickness is defined by a product of the refractive index of the layer and the geometric thickness thereof. The center wavelength $\lambda$ = 525 nm, the refractive index of titanium dioxide in the first and third layers was 2.25, and the refractive index of silicon dioxide in the second and fourth layers was 1.47.

Thereafter, by the substrate surface reversing mechanism accompanying the lens substrate holder, the other surface was directed toward the vapor deposition source, and an anti-reflection film was formed thereon under the vapor deposition conditions similar to those mentioned above.

As a result of the foregoing steps, a plastic lens having the modified layer, the first, second, and third hard coat layers, and the multilayer anti-reflection film on each side of the substrate lens was manufactured.

Example 13

On a surface of a polyurethane type lens substrate, a coat successively comprising a modified layer, first, second, and third hard coat layers, and a multilayer anti-reflection film were formed.

The thickness values of the modified layer and the first, second, and third hard coat layers were made identical to those of Example 11.

The preparatory step and the other basic operations were similar to those of Example 11. Operations different therefrom are as follows:

Formation of Modified Layer

Dimethyldiethoxysilane gas and tetra-i-propoxytitanium gas were caused to flow into the vacuum chamber with flow rates of 11 SCCM and 9 SCCM, respectively. When the pressure in the vacuum chamber became 2.9 Pa, while current of 2.6 A was caused to flow through the electromagnet coil outside of the vacuum chamber so as to provide a magnetic field between the electrodes, a radio-frequency pressure of 0.6 kW was applied to the cathode for 45 seconds. During this period of 45 seconds, the flow rate of tetra-i-propoxytitanium gas was gradually decreased at a rate of 9 SCCM per minute, while the flow rate of dimethyldiethoxysilane gas was gradually increased at a rate of 119 SCCM per minute. During this period of 45 seconds, a modified layer was formed.

Formation of Hard Coat Layer

Subsequently, dimethyldiethoxysilane gas and oxygen gas were caused to flow into the vacuum chamber at flow rates of 100 SCCM and 35 SCCM, respectively. When the pressure in the vacuum chamber became 2.9 Pa and the flow rates were stabilized, while current of 2.6 A was caused to flow through the external electromagnet coil, a radio-frequency output of 0.8 kW was applied to the cathode for 25 minutes so as to form the first hard coat layer.

Then, the flow rate of oxygen gas was increased to 70 SCCM, conductance of the exhaust system was adjusted by the variable orifice such that the pressure in the vacuum chamber pressure became 2.9 Pa, the radio-frequency output of the cathode was increased to 1 kW, and under the condition where the flow rate of dimethyldiethoxysilane gas was 100 SCCM and the current at the electromagnet coil was 2.6 A, the second hard coat layer was subsequently formed for 25 minutes.

Finally, while the flow rate of oxygen gas was increased to 140 SCCM, the other conditions were held as they were so as to form the third hard coat layer for 25 minutes.

Formation of Anti-reflection Film

Vacuum vapor deposition conditions (A: angstrom)

First layer

Titanium dioxide          130 A (geometric thickness) 0.055 $\lambda$ (optical thickness)
Pressure at deposition    $4 \times 10^{-3}$ Pa ($O_2$ atmosphere)

Second layer

Silicon dioxide          333 A (geometric thickness) 0.0915 $\lambda$ (optical thickness)

Pressure at deposition    $1 \times 10^{-3}$ Pa

Third layer

Titanium dioxide         1,189 A (geometric thickness) 0.5 $\lambda$ (optical thickness)
Pressure at deposition    $5 \times 10^{-3}$ Pa ($O_2$ atmosphere)

Fourth layer

Silicon dioxide          880 A (geometric thickness) 0.242 $\lambda$ (optical thickness)
Pressure at deposition    $1 \times 10^{-3}$ Pa

The above-mentioned optical thickness is defined by a product of the refractive index of the layer and the geometric thickness thereof. The center wavelength $\lambda$ = 525 nm, the refractive index of titanium dioxide in the first and third layers was 2.25, and the refractive index of silicon dioxide in the second and fourth layers was 1.47.

Additionally, in the same condition as Example 13, the hard coat layer was activated by the ion irradiation of the gas containing oxygen. For about 500 seconds before the completion of the second step for forming the hard coat layer, demethyldiethoxysilane gas was decreased at the rate of 11 SCCM/min. After completing the second step, argon gas was introduced to the system at the flow rate of 28 SCCM and the highfrequency output of 1.2 KW is applied to the cathode. Then the third step for forming anti-reflection film was performed after activating the surface of the hard coat layer.

The results were the same as those of Example 13.

Example 14

As the substrate, a plastic lens made of a polymer of diethylene glycol bis(allyl carbonate) (CR-39, manufactured by Pittsburgh Plate Glass Corporation) was used. The preparatory step and the conditions and operations in the steps for forming modified layer and hard coat layer were identical to those of Example 11.

The basic operation in the step for forming the anti-reflection conformed to Example 11 but were different therefrom in the following points:

After the vacuum chamber of the vapor deposition apparatus was exhausted to a pressure of $1.3 \times 10^{-3}$ Pa, an anti-reflection film composed of the following four layers was formed on the third hard coat layer of the substrate lens surface directed toward the vapor deposition source according to an electron beam evaporation technique under the following vapor deposition conditions. As the vapor deposition source, a sintered body of a mixture of $ZrO_2$ (94%) and $Sc_2O_3$ (6%) was used for the first layer, $SiO_2$ was used for the second and fourth layers, and $TiO_x$ ($0<x<2$) was used for the third layer. The substrate temperature was at ordinary temperature.

Vacuum vapor deposition conditions (A: angstrom)

First layer

Amorphous state of a mixture of zirconinum dioxide (94%) and discandium trioxide (6%)
    213 A (geometric thickness)
    0.008 $\lambda$ (optical thickness)

Pressure at deposition    $4 \times 10^{-3}$ Pa ($O_2$ atmosphere)

Second layer

Silicon dioxide          289 A (geometric thickness) 0.081 $\lambda$ (optical thickness)
Pressure at deposition    $1 \times 10^{-3}$ Pa

Third layer

Titanium dioxide         1,177 A (geometric thickness) 0.50 $\lambda$ (optical thickness)
Pressure at deposition    $5 \times 10^{-3}$ Pa ($O_2$ atmosphere)

Fourth layer

Silicon dioxide          868 A (geometric thickness) 0.243 $\lambda$ (optical thickness)

Pressure at deposition    $1 \times 10^{-3}$ Pa

The above-mentioned optical thickness is defined by a product of the refractive index of the layer and the geometric thickness thereof. The center wavelength $\lambda$ = 525 nm, the refractive index of the mixture of zirconinum dioxide (94%) and discandium trioxide (6%) in the first layer was 1.97, the refractive index of silicon dioxide in the second and fourth layers was 1.47, and the refractive index of titanium dioxide in the third layer was 2.23.

Comparative Example 6

A plastic lens having, on a surface of a substrate plastic lens, a coat comprising a modified layer, first, second, and third hard coat layers, and a multilayer anti-reflection film was formed. The material and configuration of the anti-reflection film were made different from those of Example 11.

Namely, after the third hard coat layer was formed, as in the case of Example 11, the substrate was moved to the vacuum deposition apparatus, which was then exhausted to a pressure of $1.3 \times 10^{-3}$ Pa. Thereafter, the individual layers of the anti-reflection film were formed under the following vapor deposition conditions. As the vapor deposition source, $Y_2O_x$ (0<x<3) was used for the first layer, $TiO_x$ (0<x<2) was used for the second layer, and $SiO_2$ was used for the third layer.

Vacuum vapor deposition conditions (A: angstrom)

First layer

Diyttrium trioxide          465 A (geometric thickness) 0.210 $\lambda$ (optical thickness)
Pressure at deposition    $4 \times 10^{-3}$ Pa ($O_2$ atmosphere)

Second layer

Titanium dioxide           911 A (geometric thickness) 0.50 $\lambda$ (optical thickness)
Pressure at deposition    $5 \times 10^{-3}$ Pa

Third layer

Silicon dioxide            795 A (geometric thickness) 0.285 $\lambda$ (optical thickness)
Pressure at deposition    $1 \times 10^{-3}$ Pa

The above-mentioned optical thickness is defined by a product of the refractive index of the layer and the geometric thickness thereof. The center wavelength $\lambda$ = 410 nm, the refractive index of diyttrium trioxide in the first layer was 1.85, the refractive index of titanium dioxide in the second layer was 2.25, and the refractive index of silicon dioxide in the third layer was 1.47.

Thereafter, by the substrate surface reversing mechanism accompanying the lens substrate holder, the other surface was directed toward the vapor deposition source, and an anti-reflection film was formed thereon under the vapor deposition conditions similar to those mentioned above.

As a result of these steps, a plastic lens in accordance with a comparative example having the modified layer, the first, second, and third hard coat layers, and the three-layer anti-reflection film on each side of the substrate lens was manufactured.

Comparative Example 7

A plastic lens having, on a surface of a substrate plastic lens, a coat comprising a modified layer, first, second, and third hard coat layers, and a multilayer anti-reflection film was formed.

In the plastic lens provided with the coat, while the material of the substrate, the thickness values of the modified layer and first, second, and third layers, and the method of making the modified layer and first, second, and third layers were identical to those of Example 12, the material and configuration of the anti-reflection film were made different from those of Example 12. Namely, after the third hard coat layer was formed, as in the case of Example 11, the substrate was moved to the vacuum vapor deposition apparatus, which was then exhausted to a pressure of $1.3 \times 10^{-3}$ Pa. Thereafter, the individual layers of the anti-reflection film were formed by an electron beam evaporation technique under the following vapor deposition conditions. As the vapor deposition source, $Y_2O_x$ (0<x<3) was used for the first layer, $TiO_x$ (0<x<2) was used for the second layer, and $SiO_2$ was used for the third layer.

Vacuum vapor deposition conditions (A: angstrom)

First layer

Diyttrium trioxide          465 A (geometric thickness) 0.210 $\lambda$ (optical thickness)
Pressure at deposition      $4 \times 10^{-3}$ Pa ($O_2$ atmosphere)

Second layer

Titanium dioxide            911 A (geometric thickness) 0.50 $\lambda$ (optical thickness)
Pressure at deposition      $5 \times 10^{-3}$ Pa

Third layer

Silicon dioxide             795 A (geometric thickness) 0.285 $\lambda$ (optical thickness)
Pressure at deposition      $1 \times 10^{-3}$ Pa

The above-mentioned optical thickness is defined by a product of the refractive index of the layer and the geometric thickness thereof. The center wavelength $\lambda$ = 410 nm, the refractive index of diyttrium trioxide in the first layer was 1.85, the refractive index of titanium dioxide in the second layer was 2.25, and the refractive index of silicon dioxide in the third layer was 1.47.

Thereafter, by the substrate surface reversing mechanism accompanying the lens substrate holder, the other surface was directed toward the vapor deposition source, and an anti-reflection film was formed thereon again under the vapor deposition conditions similar to those mentioned above.

As a result of these steps, a plastic lens in accordance with a comparative example having the modified layer, the first, second, and third hard coat layers, and the three-layer anti-reflection film on each side of the substrate lens can be manufactured.

Comparative Example 8

A plastic lens having, on a surface of a substrate plastic lens, a coat comprising a modified layer, first, second, and third hard coat layers, and a multilayer anti-reflection film was formed.

In the plastic lens provided with the coat, while the material of the substrate, the method of making the modified layer and first, second, and third layers, and the thickness values of the modified layer and first, second, and third layers were identical to those of Example 14, the material and configuration of the anti-reflection film were made different from those of Example 14.

Namely, after the third hard coat layer was formed, as in the case of Example 14, the substrate was moved to the vacuum deposition apparatus, which was then exhausted to a pressure of $1.3 \times 10^{-3}$ Pa. Thereafter, the individual layers of the anti-reflection film were formed by an electron beam evaporation technique under the following vapor deposition conditions. As the vapor deposition source, $Y_2O_x$ (0<x<3) was used for the first layer, $TiO_x$ (0<x<2) was used for the second layer, and $SiO_2$ was used for the third layer.

Vacuum vapor deposition conditions (A: angstrom)

First layer

Diyttrium trioxide          465 A (geometric thickness) 0.210 $\lambda$ (optical thickness)
Pressure at deposition      $4 \times 10^{-3}$ Pa ($O_2$ atmosphere)

Second layer

Titanium dioxide            911 A (geometric thickness) 0.50 $\lambda$ (optical thickness)
Pressure at deposition      $5 \times 10^{-3}$ Pa

Third layer

Silicon dioxide             795 A (geometric thickness) 0.285 $\lambda$ (optical thickness)
Pressure at deposition      $1 \times 10^{-3}$ Pa

The above-mentioned optical thickness is defined by a product of the refractive index of the layer and the geometric thickness thereof. The center wavelength $\lambda$ = 410 nm, the refractive index of diyttrium trioxide in the first layer was 1.85, the refractive index of titanium dioxide in the second layer was 2.25, and the refractive index of silicon dioxide in the third layer was 1.47.

Thereafter, by the substrate surface reversing mechanism accompanying the lens substrate holder, the other surface was directed toward the vapor deposition source, and an anti-reflection film was formed thereon again under the vapor deposition conditions similar to those mentioned above.

As a result of these steps, a plastic lens in accordance with a comparative example having the modified layer, the first, second, and third hard coat layers, and the three-layer anti-reflection film on each side of the substrate lens can be manufactured.

(Evaluation)

Mechanical durability of each sample of plastic lenses for glasses obtained by Examples 11 to 14 and Comparative Examples 6 to 8 was evaluated. Evaluation items were: 1) adhesion, 2) resistance to scratching, 3) resistance to hot water, 4) resistance to heat, 5) resistance to alkali, and 6) resistance to acid as mentioned above.

Results of evaluation are shown in Table 3 attached to the last part of the specification.

Example 15

A plastic lens having, on a surface of a substrate plastic lens, a coat comprising a modified layer, first, second, and third hard coat layers, and a multilayer anti-reflection film was formed.

Substrate

The substrate was identical to that of Example 11.

Apparatus

The apparatus identical to that of Example 11 was used.

Preparatory Step

The condition and operation of the preparatory step were identical to those of Example 11.

Formation of Modified Layer

The condition and operation of the step for forming the modified layer were identical to those of Example 11.

Formation of Hard Coat Layer

The condition and operation of the step for forming the hard coat layer were identical to those of Example 11.

Formation of Anti-reflection Film

On the hard coat layer, an anti-reflection film composed of four layers of $Al_2O_3$, $ZrO_2$, $ZrO_2$, and $SiO_2$ was formed.

The substrate lens having the coat formed thereon was moved to the load-lock chamber together with the substrate holder. Then, after the orientation of the substrate lens was changed such that one surface thereof was directed toward the vapor deposition source of the vacuum deposition apparatus, it was sent to the vapor deposition chamber.

After the vacuum chamber of the vapor deposition apparatus was exhausted to a pressure of $1.3 \times 10^{-3}$ Pa, a vapor deposition source of $Al_2O_3$ was heated and vaporized by an electron beam evaporation technique so as to form an $Al_2O_3$ layer on the hard coat layer of the substrate lens surface directed toward the vapor deposition source. Here, the layer was formed while the geometric thickness thereof was monitored by an optical film-thickness meter such that the optical thickness nd of the $Al_2O_3$ layer satisfied nd=$\lambda$/4. The optical thickness nd is defined by a product of refractive index n of this layer and geometric thickness d thereof. $\lambda$ is the designed center wavelength of light incident on this plastic lens for glasses, and $\lambda$ = 510 nm in this example.

Then, without breaking the vacuum state of the vacuum deposition apparatus, the vapor deposition source was changed to $ZrO_2$. Thereafter, oxygen gas was introduced into the vacuum chamber till the pressure therein became 6.6 $\times 10^{-2}$ Pa. Then, in a state where the shutter of the ion source was closed, the ion source was actuated such that an oxygen ion beam was emitted with an ion current density of 16 $\mu$A/cm$^2$ (beam voltage of 1,000 eV) and stabilized. Here, the direction of irradiation of the ion beam coincided with the direction of the substrate. Simultaneously, while the shutter of the vapor deposition source was closed, upon heating with an electron beam, ZrO$_2$ in the vapor deposition source was placed in a preparatory heating state and stabilized.

When both ion source and vapor deposition source were stabilized, their shutters were opened simultaneously so as to form a ZrO$_2$ layer on the Al$_2$O$_3$ layer. Here, the layer was formed while the geometric thickness thereof was monitored by the optical film-thickness meter such that the shutters of both ion source and vapor deposition source were closed when the optical thickness nd of the layer satisfied nd=$\lambda$/4 .

Subsequently, the ion current density of the ion source was increased to 76 $\mu$A/cm$^2$ (beam voltage of 1,500 eV), and the shutters of both ion source and vapor deposition source were opened again so as to form a ZrO$_2$ layer such that the optical thickness nd of the layer satisfied nd=$\lambda$/4 .

Then, without breaking the vacuum state of the vacuum deposition apparatus, the vapor deposition source was changed to SiO$_2$. Thereafter, in the state where the shutter of the ion source was still closed, the vapor deposition source was placed in a preparatory heating state upon heating with an electron beam. Simultaneously, the ion current density of the ion source was increased to 76 $\mu$A/cm$^2$ (beam voltage of 1,500 eV), and the shutters of both ion source and vapor deposition source were opened so as to form a SiO$_2$ layer such that the optical thickness nd of the layer satisfied nd=$\lambda$/4 .

After the anti-reflection film was thus formed on one surface of the substrate lens, the other surface was directed toward the vapor deposition source by means of the substrate surface reversing mechanism accompanying the lens substrate holder, and an anti-reflection film was formed thereon under the vapor deposition condition similar to that mentioned above.

Example 16

On a surface of a substrate plastic lens, a coat comprising a modified layer, first, second, and third hard coat layers, and a multilayer anti-reflection film was formed.

Substrate

The substrate was identical to that of Example 12.

Apparatus

The apparatus identical to that of Example 12 was used.

Preparatory step

The condition and operation of the preparatory step were identical to those of Example 12.

Formation of Modified Layer

The condition and operation of the step for forming the modified layer were identical to those of Example 12.

Formation of Hard Coat Layer

The condition and operation of the step for forming the hard coat layer were identical to those of Example 12.

Formation of Anti-reflection Film

On the hard coat layer, an anti-reflection film composed of four layers of Al$_2$O$_3$, ZrO$_2$, ZrO$_2$, and SiO$_2$ was formed. The condition and operation of the step for forming the anti-reflection film were identical to those in Example 15.

Example 17

Substrate

The substrate was identical to that of Example 13.

20

Apparatus

The apparatus identical to that of Example 13 was used.

Preparatory Step

The condition and operation of the preparatory step were identical to those of Example 13.

Formation of Modified Layer

The condition and operation of the step for forming the modified layer were identical to those of Example 13.

Formation of Hard Coat Layer

The condition and operation of the step for forming the hard coat layer were identical to those of Example 13.

Formation of Anti-reflection Film

On the hard coat layer, an anti-reflection film composed of four layers of $Al_2O_3$, $ZrO_2$, $ZrO_2$, and $SiO_2$ was formed. The condition and operation of the step for forming the anti-reflection film were identical to those in Example 15.

Comparative Example 9

While the thickness values of the substrate, modified layer and first, second, and third hard coat layers as well as the methods of making the modified layer and first, second, and third hard coat layers were identical to those of Examples 16, the method of making the anti-reflection film was different therefrom.

Formation of Anti-reflection Film

After the third hard coat layer was formed, as in the case of Example 15, the substrate was moved to the vacuum vapor deposition apparatus, which was then exhausted to a pressure of $1.3 \times 10^{-3}$ Pa. Thereafter, while the pressure was controlled within the range of $1.3 \times 10^{-3}$ to $1.3 \times 10^{-2}$, layers of $Al_2O_3$, $ZrO_2$, $ZrO_2$, and $SiO_2$ were successively formed by an electron beam evaporation technique as the anti-reflection film. Here, the film thickness was controlled such that the optical thickness nd of each layer satisfied nd=$\lambda$/4 ($\lambda$ = 510 nm). Similarly, an anti-reflection film was formed on the other surface of the substrate lens.

Then, the mechanical durability of each sample of plastic lenses for glasses obtained by Examples 15 to 17 and Comparative Example 9 was evaluated. Evaluation items were: 1) adhesion, 2) resistance to scratching, 3) resistance to hot water, 4) resistance to heat, 5) resistance to acid, and 6) resistance to alkali, as well as the following additional item.

7) Falling Sand Test

From a point which is 1 m above the sample, 2 kg in total of silicon carbide with a roughness of #80 (manufactured by The Carborundum Co., Ltd.; product name: Carborundum) were caused to fall down at a velocity of 115 g/min. The transmittance of the sample (at a wavelength of 550 nm) was measured before and after the falling of sand. Then, the value obtained when the transmittance before the falling of sand was divided by that after the falling of sand was indicated as a haze value.

Results of evaluation are shown in Table 4 attached to the last part of the specification.

Example 18

The substrate and the conditions and operations for the preparatory step and steps for forming the modified layer and hard coat layer were made identical to those of Example 11.

Formation of Anti-reflection Film

By means of a holder removing mechanism, each of 12 divided substrate keeping holders was removed from a carousel type substrate holder and temporarily moved to the load-lock chamber. Then, while the substrate was continuously run, together with the substrate keeping holder, along two guide rails disposed in a sputtering chamber in the vertical direction thereof, oxygen gas and argon gas were introduced into the sputtering chamber at a ratio of 9:1 so as to attain a pressure of 2 to 3 Pa. To each of Ti targets respectively disposed at both side surfaces, electric power of 40 kW was supplied, whereby 115 angstroms of a TiO$_2$ film was deposited on the lens substrate. Then, the substrate was moved to the other sputtering chamber together with the substrate keeping holder, and oxygen gas and argon gas were introduced into the sputtering chamber at a ratio of 9:1 so as to attain a pressure of 2 to 3 Pa, where electric power of 30 kW was supplied to each of Si targets respectively disposed at both side surfaces, as in the case of Ti, whereby 360 angstroms of a SiO$_2$ film was deposited on the lens substrate as the second layer. Similarly, while the substrate keeping holder was alternately moved between the sputtering chambers, four more layers of TiO$_2$ and SiO$_2$ films in total were formed, thereby yielding six layers in total of the anti-reflection film.

Here, the thickness values of the third, fourth, fifth, and sixth layers were set to 420 angstroms, 150 angstroms, 350 angstroms, and 915 angstroms, respectively. Here, the refractive indices of the TiO$_2$ and SiO$_2$ films at the designed wavelength of 550 nm were 2.36 and 1.52, respectively.

Example 19

The substrate and the conditions and operations in formations of the modified layer and hard coat layer were made identical to those of Example 18.

Formation of Anti-reflection Film

The condition and operation for forming the anti-reflection film were made identical to those of Example 18. The thickness values of thus obtained third, fourth, fifth, and sixth layers were set to 420 angstroms, 150 angstroms, 350 angstroms, and 915 angstroms, respectively. Here, the refractive indices of the TiO$_2$ and SiO$_2$ films at the designed wavelength of 550 nm were 2.45 and 1.52, respectively.

Example 20

The substrate and the conditions and operations in formations of the modified layer and hard coat layer were made identical to those of Example 18.

Formation of Anti-reflection Film

The condition and operation for forming the anti-reflection film were made identical to those of Example 19.

The thickness values of thus obtained third, fourth, fifth, and sixth layers were set to 420 angstroms, 150 angstroms, 350 angstroms, and 915 angstroms, respectively. Also, the refractive indices of the TiO$_2$ and SiO$_2$ films at the designed wavelength of 550 nm were 2.58 and 1.52, respectively.

Then, the mechanical durability of each sample of plastic lenses for glasses obtained by the foregoing examples was evaluated. Evaluation items were: 1) adhesion, 2) resistance to scratching, 3) resistance to hot water, 4) resistance to heat, 5) resistance to acid, and 6) resistance to alkali, as well as the following additional items.

7) Interference Fringe

Upon irradiation with natural light, samples in which an interference fringe is hardly visible are designated as good, while those in which an interference fringe is visible with naked eye are designated as poor.

8) Antistatic Property

After the sample lens has been left overnight under a condition with a humidity of 65% and a temperature of 20°C, the surface thereof is rubbed with a buckskin, and then the antistatic property is judged in terms of whether ash is attached thereto or not. Samples without ash being attached thereto are designated as A, whereas those to which ash attaches are designated as B.

9) Fog Resistance

After the sample lens has been left for 30 minutes in an atmosphere with a humidity of 20% and a temperature of 5°C, it is taken into an atmosphere with a humidity of 80% and a temperature of 30°C, and then the time till fog disappears is measured.

Results of evaluation are shown in Table 5 attached to the last part of the specification.

Substrate + Modified Layer + Hard Coat Layer + Anti-reflection Film + Multifunctional Film

Example 21

A plastic lens having a coat composed of a modified layer, first, second, and third hard coat layers, a multilayer anti-reflection film, and a multifunctional thin film on a substrate plastic lens was manufactured.

Substrate

The substrate identical to that of Example 13 was used.

Apparatus

The apparatus identical to that of Example 13 was used.

Preparatory Step

The condition and operation of the preparatory step were made identical to those of Example 13.

Formation of Hard Coat Layer

The condition and operation of the step for forming the hard coat layer were made identical to those of Example 13.

Formation of Anti-reflection Film

The substrate lens having the modified layer and the hard coat layer formed thereon was moved to the load-lock chamber together with the substrate holder. Then, after the orientation of the substrate lens was changed such that one surface thereof was directed toward the vapor deposition source of the vacuum deposition apparatus, it was sent to the vapor deposition chamber.

After the vacuum chamber of the vapor deposition apparatus was exhausted to a pressure of $1.3 \times 10^{-3}$ Pa, an anti-reflection film composed of the following four layers was formed on the third hard coat layer of the substrate lens surface directed toward the vapor deposition source according to an electron beam evaporation technique under the following vapor deposition conditions. As the vapor deposition source, $TiO_x$ ($0<x<2$) was used for the first and third layers, whereas $SiO_2$ was used for the second and fourth layers. Vacuum vapor deposition conditions (A: angstrom)

First layer

Titanium dioxide          420 A (geometric thickness)
Pressure at deposition    $4 \times 10^{-3}$ Pa ($O_2$ atmosphere)

Second layer

Silicon dioxide           420 A (geometric thickness)
Pressure at deposition    $1 \times 10^{-3}$ Pa

Third layer

Titanium dioxide          2,160 A (geometric thickness)
Pressure at deposition    $5 \times 10^{-3}$ Pa ($O_2$ atmosphere)

Fourth layer

Silicon dioxide           1,200 A (geometric thickness)
Pressure at deposition    $1 \times 10^{-3}$ Pa

After the anti-reflection film was formed on one surface of the substrate lens, by the substrate surface reversing mechanism accompanying the lens substrate holder, the other surface was directed toward the vapor deposition source, and an anti-reflection film was formed thereon again under the vapor deposition conditions similar to those mentioned above.

Formation of Multifunctional Film

After the anti-reflection film was formed, the lens was returned to the load-lock chamber together with the holder and then, together with the holder, transferred to a plasma vacuum chamber. Into the plasma vacuum chamber, bis(dimethylamino)methylvinylsilane and nitroethane were introduced at rates of 5 to 50 SCCM and 0.5 to 5 SCCM, respectively, so as to set the pressure in the vacuum chamber to 3 Pa. Under this condition, current of 2.6 A was caused to flow through the external electromagnet coil, while 0.5 kW of a radio-frequency output was applied to the cathode. Accordingly, a thin film of an amido-containing organic silicon compound (specific compound name: bis(dimethylamino)methylvinylsilane, 1,3-bis(chloromethyl)-1,1,3,3-tetramethylsilazane, 1,3-divinyl-1,1,3,3-tetramethylsilazane, or the like) was formed with a thickness of 50 angstroms on the anti-reflection film.

According to these steps, a plastic lens having the modified layer, first, second, and third hard coat layers, multilayer anti-reflection film, and multifunctional thin film on each surface of the substrate lens was manufactured.

Comparative Example 10

For comparison, prepared was a lens in which the modified layer to the anti-reflection film were formed on the substrate identical to that of Example 21 according to the steps of Example 21.

(Evaluation)

The plastic lenses for glasses obtained by the foregoing examples were evaluated. Items and methods of evaluation are as follows. Namely, evaluation items were: 1) adhesion, 2) resistance to scratching, 3) resistance to hot water, 4) resistance to heat, 5) resistance to acid, 6) resistance to alkali, 7) interference fringe, 8) antistatic property, and 9) fog resistance, as well as the following additional items.

10) Resistance to Shock

In Example and Comparative Example, those using a lens with a center thickness of 1.2 mm as the substrate lens are employed as samples. Based on the FDA Standards of the United States, those which are not broken when a steel ball of 16.4 g is dropped at the center portion of the sample lens from the height of 127 cm are considered acceptable.

11) Water Stain Property

Tap water is dropped on the surface of a sample lens, dried, and then the residue is wiped off with a cloth. Samples in which the residue can be completely wiped off are evaluated as A, while those with the remaining residue are evaluated as B.

12) Angle of Contact

It is measured with a contact angle meter (type: CA-D; manufactured by Kyowa Chemical Industry Co., Ltd.) according to a droplet technique.

Results of evaluation are shown in Tables 6 and 7 attached to the last part of the specification.

From Table 6, it is seen that the sample of Example is superior to that of Comparative Example in terms of adhesion, resistance to scratching (steel wool), and resistance to acid. Also, from Table 7, it is seen that, while water stain occurs in the sample of Comparative Example, it does not occur in the sample of Example. Further, as compared with the sample of Comparative Example, the sample of Example has a smaller angle of contact and a higher hydrophilic property. Moreover, it is seen that the sample of Example is hard to be fogged and has a higher antistatic property. The resistance to scratching (with sand eraser), resistance to hot water, resistance to heat, resistance to alkali, resistance to shock, and generation of interference of the sample of Example are on a par with the sample of Comparative Example.

Example 22

The plastic lens provided with a coat manufactured in Example 15 was further dipped into a dipping solution bath containing hexamethyldisilazane. Then, it was heated and cured for 30 minutes at 65°C, whereby a water-repellent thin film, which functions as an anti-water-stain coat, was formed on the anti-reflection film.

Example 23

The plastic lens provided with a coat manufactured in Example 16 was further dipped into a dipping solution bath containing hexamethyldisilazane. Then, it was heated and cured for 30 minutes at 65°C, whereby a water-repellent thin film, which functions as an anti-water-stain coat, was formed on the anti-reflection film.

Example 24

The plastic lens provided with a coat manufactured in Example 17 was further dipped into a dipping solution bath containing hexamethyldisilazane. Then, it was heated and cured for 30 minutes at 65°C, whereby a water-repellent thin film, which functions as an anti-water-stain coat, was formed on the anti-reflection film.

Results of evaluation are shown in Table 8 attached to the last part of the specification.

Table 1

| Amount of Organic Compound Gas and Refractive Index | | | |
|---|---|---|---|
| Gas speicies and gas flow rare | | | Refractive index |
| Tetra-i-propoxytitanium Ti(O-i-$C_3H_7$) | Diethoxydimethylsilane $(C_2H_5O)_2Si(CH_3)_2$ | Oxygen $O_2$ | |
| 0 | 100 | 0 | 1.50 |
| 9 | 20 | 27 | 1.56 |
| 9 | 11 | 27 | 1.60 |
| 9 | 6 | 27 | 1.67 |

Table 2

| | Adhesion | Scratching resistance | | Hot-water resistance | Alkali resistance | Acid resistance | Heat resistance |
|---|---|---|---|---|---|---|---|
| | | SW | SE | | | | |
| Ex. 2 | Good | A | A | Good | Good | Good | Good |
| Ex. 3 | Good | A | A | Good | Good | Good | Good |
| Ex. 4 | Good | A | A | Good | Good | Good | Good |
| Ex. 5 | Good | A | A | Good | Good | Good | Good |
| Ex. 6 | Good | A | A | Good | Good | Good | Good |
| Ex. 7 | Good | A | A | Good | Good | Good | Good |
| Ex. 8 | Good | A | A | Good | Good | Good | Good |
| Ex. 9 | Good | A | A | Good | Good | Good | Good |
| Ex. 10 | Good | A | A | Good | Good | Good | Good |
| Comp. Ex. 3 | Poor | B | A | Good | Poor | Good | Good |
| Comp. Ex. 4 | Poor | B | A | Good | Good | Good | Poor |
| Comp. Ex. 5 | Good | B | A | Good | Poor | Good | Good |
| Evaluation of Scratching Resistance<br>A: No damage.<br>B: Many damages occur.<br>SW: Steel wool<br>SE: Sand eraser | | | | | | | |

Table 3

|  | Adhesion | Scratching resistance | | Hot-water resistance | Heat resistance | Drug Resistance | | 
|---|---|---|---|---|---|---|---|
|  |  | SW | SE |  |  | Acid | Alkali |
| Ex. 11 | Good | 2A | A | Good | Good | Good | Good |
| Ex. 12 | Good | 2A | A | Good | Good | Good | Good |
| Ex. 13 | Good | 2A | A | Good | Good | Good | Good |
| Ex. 14 | Good | 2A | A | Good | Good | Good | Good |
| Comp. Ex. 6 | Poor | B | AB | Poor | Poor | Poor | Good |
| Comp. Ex. 7 | Poor | B | AB | Poor | Poor | Poor | Good |
| Comp. Ex. 8 | Poor | B | AB | Poor | Poor | Poor | Good |

Evaluation of Scratching Resistance
2A: No damage.
A: Several damages.
AB: Several tens of damages.
B: Many damages occur.
SW denotes cases where steel wool is used.
SE denotes cases where sand eraser is used.

Table 4

|  | Adhesion | Scratching resistance | | Hot-water resistance | Heat resistance | Drug Resistance | | Falling sand |
|---|---|---|---|---|---|---|---|---|
|  |  | SW | SE |  |  | Acid | Alkali |  |
| Ex. 15 | Good | 2A | A | Good | Good | Good | Good | 0.9 |
| Ex. 16 | Good | 2A | A | Good | Good | Good | Good | 1.2 |
| Ex. 17 | Good | 2A | A | Good | Good | Good | Good | 1.2 |
| Comp. Ex. 9 | Good | B | A | Poor | Poor | Poor | Good | 2.0 |

Evaluation of Scratching Resistance
2A: No damage.
A: Several damages.
AB: Several tens of damages.
B: Many damages occur.
SW denotes cases where steel wool is used.
SE denotes cases where sand eraser is used.

Table 5

| | Adhesion | Scratching resistance | | Hot-water resist-ance | Heat resist-ance | Drug resistance | | Interfer-ence Fringe | Anti-static Property | Fog registanc e (sec) |
|---|---|---|---|---|---|---|---|---|---|---|
| | | SW | SE | | | Acid | Alkali | | | |
| Ex. 18 | Good | 2A | A | Good | Good | Good | Good | Good | A | 90 |
| Ex. 19 | Good | 2A | A | Good | Good | Good | Good | Good | A | 70 |
| Ex. 20 | Good | 2A | A | Good | Good | Good | Good | Good | A | 70 |

Evaluation of Scratching Resistance
2A: No damages.
A : Several damages.
AB: Several tens of damages.
B : Many damages occur.
SW: Steel Wool.
SE: Sand Eraser.

Table 6

| | Adhesion | Scratching resistance | | Hot-water resistance | Heat resist-ance | Drug Resist-ance | | Shock resistance | Interference Fringe |
|---|---|---|---|---|---|---|---|---|---|
| | | SW | SE | | | Acid | Alkali | | |
| Ex. 21 | Good | A | A | Good | Good | Good | Good | AC | Good |
| Comp. Ex. 10 | Poor | AB | A | Good | Good | Poor | Good | AC | Good |

SW: cases where steel wool is used.
SE: cases where sand eraser is used.
AC: acceptable.

Table 7

| | Water stain | Contact angle (deg) | Fog resistance (sec) | Antistatic Property |
|---|---|---|---|---|
| Ex. 21 | A | 7 | 20 | A |
| Comp. Ex. 10 | B | 35 | 70 | B |

Table 8

| | Adhesion | Scratching resistance | | Hot-water resistance | Heat resistance | Drug Resistance | |
|---|---|---|---|---|---|---|---|
| | | SW | SE | | | Acid | Alkali |
| Ex. 22 | Good | A | A | Good | Good | Good | Good |
| Ex. 23 | Good | A | A | Good | Good | Good | Good |
| Ex. 24 | Good | A | A | Good | Good | Good | Good |

Evaluation of scratching Resistance
A : No damages.
B : Many damages occur.
SW: Steel Wool
SE: Sand Eraser

**Claims**

1. An optical article comprising a substrate made of a synthetic resin; a modified layer formed on said substrate, said modified layer having a refractive index changing with changes in the thickness thereof; and a hard coat layer formed on said modified layer so as to be continuous with said modified layer, said hard coat layer having a thickness relatively larger than the thickness of said modified layer and having a refractive index which is substantially constant with changes in the thickness thereof.

2. An optical article according to claim 1, wherein said modified layer contains at least one of Sn-type, Zr-type, Al-type, Hf-type, Ta-type, Si-type, Sb-type, Ti-type, W-type, Fe-type, In-type, and Y-type organic compounds, while said hard coat layer contains at least one of Sn-type, Zr-type, Al-type, Hf-type, Ta-type, Si-type, Sb-type, Ti-type, W-type, Fe-type, In-type, and Y-type organic compounds.

3. An optical article according to claim 1, wherein said modified layer contains at least one of Sn-type, Zr-type, Al-type, Hf-type, Ta-type, Si-type, Sb-type, Ti-type, W-type, Fe-type, In-type, and Y-type organic compounds, while said hard coat layer contains Si and O.

4. An optical article according to claim 1, wherein said modified layer contains at least one of Si-type and Ti-type compounds, while said hard coat layer contains Si and O.

5. An optical article according to any of claims 1 to 4, wherein said modified layer has a thickness greater than 100 nm but smaller than 900 nm, while said hard coat layer has a thickness greater than 0.4 µm but smaller than 5 µm.

6. An optical article comprising a substrate made of a synthetic resin which transmits light therethrough; a modified layer formed on said substrate, said modified layer having a refractive index changing with changes in the thickness thereof; a hard coat layer formed on said modified layer so as to be continuous with said modified layer, said hard coat layer having a thickness relatively larger than the thickness of said modified layer and having a refractive index which is substantially constant with changes in the thickness thereof; and an anti-reflection film formed on said hard coat layer.

7. An optical article according to claim 6, wherein said modified layer contains at least one of Sn-type, Zr-type, Al-type, Hf-type, Ta-type, Si-type, Sb-type, Ti-type, W-type, Fe-type, In-type, and Y-type organic compounds, while said hard coat layer contains at least one of Sn-type, Zr-type, Al-type, Hf-type, Ta-type, Si-type, Sb-type, Ti-type, W-type, Fe-type, In-type, and Y-type organic compounds.

8. An optical article according to claim 6, wherein said modified layer contains at least one of Si-type and Ti-type compounds, while said hard coat layer contains Si and O.

9. An optical article according to any of claims 6 to 8, wherein said modified layer has a thickness greater than 100

28

nm but smaller than 900 nm, while said hard coat layer has a thickness greater than 0.4 $\mu$m but smaller than 5 $\mu$m.

**10.** An optical article according to any of claims 6 to 9, wherein said anti-reflection film comprises first, second, third, and fourth layers successively stacked on the substrate, said first layer containing titanium oxide or zirconium oxide, said third layer containing titanium oxide or zirconium oxide, and said second and fourth layers containing silicon oxide.

**11.** An optical article according to any of claims 6 to 9, wherein said anti-reflection film comprises first, second, third, and fourth layers successively stacked on the substrate, and wherein, assuming that an optical thickness of a layer is a product of a geometric thickness thereof and a refractive index thereof and that $\lambda$ is any value of at least 450 nm but not exceeding 550 nm, the optical thickness of each of the first and second layers in said anti-reflection film is at least $0.05 \times \lambda$ but not exceeding $0.15 \times \lambda$, the optical thickness of the third layer is at least $0.36 \times \lambda$ but not exceeding $0.49 \times \lambda$, and the optical thickness of the fourth layer is at least $0.15 \times \lambda$ but not exceeding $0.35 \times \lambda$.

**12.** An optical article according to any of claims 6 to 9, wherein said anti-reflection film comprises first, second, third, and fourth layers successively stacked on the substrate, said first layer containing aluminum oxide, said second and third layers containing zirconium oxide, and said fourth layer containing silicon oxide.

**13.** An optical article according to claims 12, wherein, assuming that an optical thickness of a layer is a product of a geometric thickness thereof and a refractive index thereof and that $\lambda$ is a center wavelength of light incident on said anti-reflection film, the optical thickness of each of the first, second, third, and fourth layers of said anti-reflection film is $\lambda/4$.

**14.** An optical article according to any of claims 6 to 9, wherein said anti-reflection film is formed by $TiO_2$ and $SiO_2$ films which are alternately stacked on each other, and wherein said $TiO_2$ film has a refractive index of at least 2.36 but smaller than 2.60 with respect to light having a wavelength of at least 500 nm but smaller than 550 nm.

**15.** An optical article comprising a substrate made of a synthetic resin; a modified layer formed on said substrate, said modified layer having a refractive index changing with changes in the thickness thereof; a hard coat layer formed on said modified layer so as to be continuous with said modified layer, said hard coat layer having a thickness relatively larger than the thickness of said modified layer and having a refractive index which is substantially constant with changes in the thickness thereof; an anti-reflection film formed on said hard coat layer; and a multifunctional thin film formed on said anti-reflection film.

**16.** An optical article according to claims 15, wherein said multifunctional film comprises an amido-containing organic silane compound.

**17.** An optical article according to claims 15, wherein said multifunctional film comprises an organic silazane compound expressed by the following general formula:

$$C_pF_{2P+1}CH_2CH_2Si(NH)_{1.5}$$

wherein p is a positive integer.

**18.** A method of making an optical article comprising a first step in which a substrate made of a synthetic resin is set within a magnetic field in an apparatus which is maintained under vacuum, an organic compound gas selected from the group consisting of Sn-type, Zr-type, Al-type, Hf-type, Ta-type, Si-type, Sb-type, Ti-type, W-type, Fe-type, In-type, and Y-type organic compounds is heated, vaporized, and turned into a plasma state as a magnetic field is provided and a radio-frequency output is applied thereto for a predetermined time, and a flow rate of said organic compound gas and the radio-frequency output are controlled so as to form a modified layer on said substrate, said modified layer having a refractive index changing with changes in the thickness thereof; and a second step in which at least one organic compound gas selected from the group consisting of Sn-type, Zr-type, Al-type, Hf-type, Ta-type, Si-type, Sb-type, Ti-type, W-type, Fe-type, In-type, and Y-type organic compounds is caused to flow in succession to said modified layer forming process, and the flow rate of thus flowing organic compound gas and the radio-frequency output are controlled so as to form a hard coat layer on said modified layer in succession to said modified layer, said hard coat layer being relatively thicker than said modified layer and having a refractive index substantially constant with changes in the thickness thereof.

**19.** A method of making an optical article according to claim 18, wherein at least one of an organic compound gas containing Si and an organic compound gas containing Ti is used in the first step, while a mixed gas of the organic compound gas containing Si and oxygen gas is used in the second step.

20. A method of making an optical article comprising a first step in which a substrate made of a synthetic resin is set within a magnetic field in an apparatus which is maintained under vacuum, an organic compound gas selected from the group consisting of Sn-type, Zr-type, Al-type, Hf-type, Ta-type, Si-type, Sb-type, Ti-type, W-type, Fe-type, In-type, and Y-type organic compounds is heated, vaporized, and turned into a plasma state as a magnetic field is provided and a radio-frequency output is applied thereto for a predetermined time, and a flow rate of said organic compound gas and the radio-frequency output are controlled so as to form a modified layer on said substrate, said modified layer having a refractive index changing with changes in the thickness thereof; a second step in which at least one organic compound gas selected from the group consisting of Sn-type, Zr-type, Al-type, Hf-type, Ta-type, Si-type, Sb-type, Ti-type, W-type, Fe-type, In-type, and Y-type organic compounds is caused to flow in succession to said modified layer, and the flow rate of thus flowing organic compound gas and the radio-frequency output are controlled so as to form a hard coat layer on said modified layer in succession to said modified layer, said hard coat layer being relatively thicker than said modified layer and having a refractive index substantially constant with changes in the thickness thereof; and a third step in which, subsequently to the second step, a vacuum evaporated multilayer anti-reflection film is formed on said hard coat layer in the apparatus maintained under vacuum.

21. A method of making an optical article according to claim 20, wherein at least one of an organic compound gas containing Si and an organic compound gas containing Ti is used in the first step, while a mixed gas of the organic compound gas containing Si and oxygen gas is used in the second step.

22. A method of making an optical article according to any of claims 20 to 21, wherein zirconium oxide is used to form second and third layers, while silicon oxide is used to form fourth layer by an ion-beam assisted deposition, after aluminum oxide is used to form first layer.

23. A method of making an optical article according to any of claims 20 to 21, wherein said anti-reflection film comprises first, second, third, fourth, fifth, and sixth layers successively stacked on the substrate, said anti-reflection film being formed as titanium oxide and silicon oxide films are alternately stacked on each other.

24. A method of making an optical article according to any of claims 20 to 21, wherein said anti-reflection film is formed by $TiO_2$ and $SiO_2$ films which are alternately laminated on each other by a sputtering method, and wherein said $TiO_2$ film has a refractive index of at least 2.36 but smaller than 2.60 with respect to light having a wavelength of at least 500 nm but smaller than 550 nm.

25. A method of making an optical article according to any of claims 20 to 21, wherein at least one of atmospheres of the first and second steps has a pressure greater than 0.1 Pa but smaller than 13 Pa.

26. A method of making an optical article according to any of claims 20 to 21, wherein the surface of the hard coat layer is activated by being exposed in the plasma of the gas containing at least oxygen in the step between the second step and the third step.

27. A method of making an optical article comprising a first step in which a substrate made of a synthetic resin is set within a magnetic field in an apparatus which is maintained under vacuum, an organic compound gas selected from the group consisting of Sn-type, Zr-type, Al-type, Hf-type, Ta-type, Si-type, Sb-type, Ti-type, W-type, Fe-type, In-type, and Y-type organic compounds is heated, vaporized, and turned into a plasma state as a magnetic field is provided and a radio-frequency output is applied thereto for a predetermined time, and a flow rate of said organic compound gas and the radio-frequency output are controlled so as to form a modified layer on said substrate, said modified layer having a refractive index changing with changes in the thickness thereof; a second step in which at least one organic compound gas selected from the group consisting of Sn-type, Zr-type, Al-type, Hf-type, Ta-type, Si-type, Sb-type, Ti-type, W-type, Fe-type, In-type, and Y-type organic compounds is caused to flow in succession to said modified layer, and the flow rate of thus flowing organic compound gas and the radio-frequency output are controlled so as to form a hard coat layer on said modified layer in succession to said modified layer, said hard coat layer being relatively thicker than said modified layer and having a refractive index substantially constant with changes in the thickness thereof; a third step in which, subsequently to the second step, a vapor-deposited multilayer anti-reflection film is formed on said hard coat layer in the apparatus maintained under vacuum; and a fourth step in which, subsequently to the third step, an organic compound gas containing Si and a gas containing a nitro compound are introduced onto said anti-reflection film and reacted with each other by a chemical vapor deposition technique using a plasma so as to form a multifunctional film comprising an amido-containing organic silane compound on said anti-reflection film.

28. A method of making an optical article according to claim 26, wherein said multifunctional film comprises an organic silazane compound expressed by the following general formula:

$$C_pF_{2P+1}CH_2CH_2Si(NH)_{1.5}$$

wherein p is a positive integer.